(19) Europäisches Patentamt
European Patent Office
Office européen des brevets

(11) **EP 3 816 436 A1**

(12) **EUROPEAN PATENT APPLICATION**

(43) Date of publication:
**05.05.2021 Bulletin 2021/18**

(51) Int Cl.:
***F03D 17/00*** *(2016.01)*

(21) Application number: **19206875.7**

(22) Date of filing: **04.11.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(71) Applicant: **Siemens Gamesa Renewable Energy
A/S
7330 Brande (DK)**

(72) Inventor: **Christiansen, Soeren
9530 Stoevenring (DK)**

(74) Representative: **Aspacher, Karl-Georg
Siemens Gamesa Renewable Energy GmbH & Co.
KG
Otto-Hahn-Ring 6
81739 München (DE)**

(54) **WIND SPEED ESTIMATION ARRANGEMENT**

(57)  The invention describes a wind speed estimation arrangement (1) of a wind turbine (2), comprising a measurement pulse module (10, 11) comprising a pulse generator (10) arranged to transmit a pulse (P) into one end ($20C_{root}$) of a lightning down conductor (20C) of a rotor blade (20) of the wind turbine (2) and a pulse detector (11) arranged to detect the reflected pulse (R); a wind load estimation unit (12) configured to estimate a wind load ($F_D$) acting on the rotor blade (20) on the basis of a parameter (110) of the reflected pulse (R); and a wind speed computation unit (13) configured to compute a wind speed estimate (v) for a point in the rotor swept area (D) on the basis of the estimated wind load ($F_D$). The invention further describes a wind turbine (2) with such a wind speed estimation arrangement (1); and a method of determining wind speeds (v) in the rotor swept area (D) of a wind turbine (2).

FIG 2

EP 3 816 436 A1

**Description**

The invention describes a wind speed estimation arrangement and a method of determining wind speeds in the rotor swept area of a wind turbine.

Wind speed is an important parameter that must be determined reliably for the safe and efficient operation of a wind turbine. For example, it is important to know when the wind speed has reached a minimum (the cut-in speed) so that a wind turbine can be turned on, and also when it has reached a maximum (the cut-out speed), at which point the wind turbine must be shut down in order to avoid damage. These wind speeds can be determined accurately enough using an appropriate sensor arrangement, for example by using a velocity anemometer (e.g. a cup anemometer or a sonic anemometer) mounted on the roof of the nacelle. Another way of measuring wind speed is to use a pressure anemometer, arranged for example to monitor differential pressures over the front or nose of the hub.

However, all of these approaches share a significant limitation, namely that they can only measure wind speed at a single location. For example, an anemometer mounted on the nacelle can only measure the speed of the wind passing over the nacelle. It cannot provide any information for wind speed at a point in the rotor swept area or "rotor disc", i.e. the circular area that is swept by the rotor blades. The length of the rotor blades of a modern wind turbine can be in the order of 70 m or more, so that the area of the rotor disc can exceed 15,400 $m^2$. The ability to measure wind speeds over the rotor swept area is becoming more important for several reasons. One significant reason is that a wind turbine in a wind park may be positioned downwind of one or more upwind wind turbines, and is likely to be affected by turbulence in the wake of any such upwind wind turbine. Another reason is that wind shear results in higher wind speeds in the upper region of the rotor swept area. The pitch angle of a rotor blade will also influence the locally perceived wind speed. For these and other reasons, there may be significantly different wind speeds being "seen" at various points along the length of a rotor blade at any one time, and the wind speed at any one point along the length of the rotor blade will vary as the rotor blade passes through a full rotation.

Various approaches have been proposed in order to establish the wind speeds seen at different points in the rotor swept area of a wind turbine. For example, strain gauges may be mounted at various points along the length of the blade to determine the deflection of the rotor blade. From this, the load on the rotor blade can be estimated, allowing the wind speed to be deduced. Another strain-based approach is to secure a fibre-optic cable to the body of the rotor blade and to use a reflectometer to determine the deflection of the rotor blade. In an alternative approach, a Doppler Lidar system can be mounted on the nacelle to measure wind speed in a region upwind of the wind turbine. However, these solutions are complex and expensive and add to the overall cost of the wind turbine.

It is therefore an object of the invention to provide a more economical way of determining wind speed in the rotor swept area of a wind turbine.

This object is achieved by the wind speed estimation arrangement of claim 1 and by the method of claim 9 of determining wind speeds in the rotor swept area of a wind turbine.

In the context of the invention, a wind turbine comprises a number of rotor blades, usually three, mounted to a hub. The rotor blades and hub are collectively referred to as the aerodynamic rotor. Each rotor blade of a wind turbine may be assumed to be equipped with a down conductor of a lightning protection system (LPS) of the wind turbine, and the down conductor may be assumed to be arranged in the interior of the rotor blade. The down conductors from the rotor blades converge in the hub, and a bridge (for example a set of carbon brushes) provides a lightning path from the aerodynamic rotor to the nacelle and from there into the tower and to ground. Generally, the current path to ground will comprise several down conductors at various regions of the wind turbine, as will be known to the skilled person.

According to the invention, the wind speed estimation arrangement of a wind turbine comprises a measurement pulse module comprising a pulse generator arranged to transmit a pulse into one end of a lightning down conductor extending along the length of a rotor blade of the wind turbine and a pulse detector arranged to detect the reflected pulse; a wind load estimation unit configured to estimate a wind load acting on the rotor blade on the basis of a parameter of the reflected pulse; and a wind speed computation unit configured to compute a wind speed estimate for a point in the rotor swept area on the basis of the estimated wind load.

An advantage of the inventive wind speed estimation arrangement is that it makes use of the down conductor that is already installed in a rotor blade. The inventive wind speed estimation arrangement can therefore be realised with little effort, since there is no need to attach multiple strain gauges on the rotor blade body, and there is no need to install a dedicated fibre-optic cable in the interior of the rotor blade. The pulse generator and pulse detector can be purchased as simple off-the-shelf units, and connection of the measurement pulse module to the down conductor is relatively straightforward.

The units or modules of the inventive wind speed estimation arrangement, in particular the wind load estimation unit and wind speed computation unit, can be completely or partially realised as software modules running on a processor of a control unit such as a wind turbine controller, for example the controller already installed in the wind turbine, so that these units are also associated with favourably low costs. The software already installed on an existing system can be updated, with relatively little effort, to install and run the relevant method steps of the present application.

According to the invention, the method of determining wind speeds in the rotor swept area of a wind turbine comprises the steps of providing such a wind speed estimation arrangement; operating the pulse generator of the measurement pulse module to transmit a pulse into one end of a lightning down conductor of a rotor blade of the wind turbine; operating the pulse detector to detect the reflected pulse; estimating a wind load on the rotor blade on the basis of a parameter of the reflected pulse; and computing a wind speed estimate along a radius of the rotor swept area on the basis of the estimated wind load.

An advantage of the inventive method is that wind speed estimates can be obtained over the rotor swept area with relatively little effort, since the method only requires that the wind load on the rotor blade deflection be estimated. This is done using a down conductor that is already installed in the rotor blade. Since the characteristics of such a down conductor are well known or can easily be established, wind load on the rotor blade can determined accurately and with favourably little computational effort.

With a collection of wind speed estimates over the rotor swept area, updated at favourably brief intervals, it is possible for the wind turbine control system to apply this knowledge to perform various corrections, for example to adjust the rotor blade pitch commands, to adjust the generator torque, to adjust the nacelle yaw angle, etc. The ability to quickly react to changes in wind speed within the rotor swept area can result in a significant improvement in the annular energy production (AEP) of the wind turbine, and can also contribute to a reduction in fatigue on key components by avoiding loading from large local wind gusts.

Particularly advantageous embodiments and features of the invention are given by the dependent claims, as revealed in the following description. Features of different claim categories may be combined as appropriate to give further embodiments not described herein.

In the following, it may be assumed that a lightning down conductor extends from the root region of a rotor blade towards the tip of the rotor blade. The "inner end" of the down conductor shall be understood to be the end that terminates in or near the root region of the blade. The "outer end" of the down conductor shall be understood to be the end that terminates in or near the tip of the blade. The down conductor may extend along the length of the rotor blade in a direction that follows the longitudinal axis of the rotor blade. The down conductor may be assumed to be rigidly mounted in the interior of the rotor blade, and may for example be secured at several points along its length to the interior surface of the rotor blade. The down conductor can be suspended in the interior cavity of the rotor blade, or it may lie against the interior surface of the rotor blade. Equally, a down conductor may be embedded in a wall of the rotor blade. Regardless of how the down conductor is actually realised, a main aspect of the invention is that a deflection of the rotor blade will result in a deflection of the down conductor, and the measure of down conductor deflection is related to the measure of rotor blade deflection.

A wind turbine may be assumed to have three rotor blades, each of which comprises such an LPS down conductor arranged in the interior of the rotor blade. It may also be assumed that the rotor blades of a wind turbine rotate in a clockwise direction as viewed from an upwind vantage point, i.e. when the viewer is facing the hub of the wind turbine.

A rotor blade may be essentially straight in the unloaded state. However, a very long rotor blade can be formed to have a curved shape in its unloaded state, so that it will assume a straighter shape when subject to wind loading (the purpose of this curved shape is to avoid collision with the tower as the rotor blade passes through the six o'clock position). A rotor blade may also exhibit some "twist" about its longitudinal axis for essentially the same reason.

The inventive wind turbine also comprises an embodiment of the inventive wind speed estimation arrangement. Preferably, the wind speed estimation arrangement is realised to transmit a pulse into the end of each lightning down conductor and to detect each reflected pulse. This can be done by providing three measurement pulse modules and connecting each to a down conductor, or by connecting a single measurement pulse module to the three down conductors. The advantage of using three measurement pulse modules is that each can operate independently of the other, so that a "map" or "picture" of the wind speeds over the swept area can be obtained in a favourably short period of time, or the wind speed map can have a higher resolution.

However, the use of a single measurement pulse module is more economical. Therefore, in a particularly preferred embodiment of the invention, the measurement pulse module comprises a single pulse generator and a single pulse detector. In this preferred embodiment, an identical pulse is transmitted to each rotor blade in turn.

Measurement pulses can be generated at any suitable rate, for example at a rate of 25 Hz. Since the electrical measurement pulse travels at the speed of light, pulse transmission and the detection of the reflected pulse can be accomplished within a very brief time. A favourably high "resolution" for the wind speed map can be obtained by choosing the measurement pulse rate according to the angular velocity of the rotor blades about the hub. In relatively calm conditions, the global wind speed is low, and a more even wind speed distribution may be expected over the rotor swept area. In strong wind conditions, the global wind speed is high, and a more uneven wind speed distribution may be expected over the rotor swept area. In each case, the measurement pulses may be generated at a suitable rate in order to achieve a desired resolution, i.e. a desired level of accuracy for the wind speed map.

Preferably, the measurement pulse module is operated to transmit a pulse into a rotor blade down conductor and to detect the reflected pulse as the rotor blade moves through an arc segment of at most 10°, more preferably an arc segment of at most 5°, most preferably an arc segment of at most 1°. Preferably, the measurement pulse module is operated to transmit pulses at the rate of up to 1 kHz Hz into a rotor blade down conductor. A favourably accurate "map" of the wind speed distribution over the rotor swept area can be obtained in this way during the time it takes for the rotor blades to sweep the rotor disc.

A measurement pulse module is preferably arranged in the wind turbine hub or at a suitable location near the root regions of the rotor blades. A measurement pulse module is preferably connected to a rotor blade down conductor using a low impedance cable, for example a 50 Q coaxial cable, and a suitable connector. Appropriate measures may be taken to protect the measurement pulse module from lightning current, as will be known to the skilled person.

The deflection of the rotor blade can be estimated on the basis of a time delay of the reflected pulse. For example, if the pulse is able to travel to the outer end of the down conductor and then back to the inner end of the down conductor, this can be interpreted to mean that the down conductor is essentially straight. For a blade that is pre-curved, the straight shape results from deflection. In this case, the amount of deflection required to result in the straight shape is associated with a certain wind load, so that the wind speed can be deduced from this wind load. In a similar manner, a pulse that is reflected before reaching the outer end of the blade will be associated with a shorter time delay.

Preferably, the inventive method includes a prior calibration procedure, in which the rotor blade is deflected while the measurement pulse module sends a pulse into the down conductor and observes the time delay of the reflected pulse(s). During calibration, loads can be placed into the blade at various points to simulate wind loading, while collecting information about reflected pulses. In this way, a library can be compiled to relate a measured deflection of the rotor blade to a time delay of a pulse reflection. In a preferred embodiment of the invention, the wind speed estimation arrangement comprises a library module relating reflection parameters of a specific pulse to rotor blade deflection values. For example, the relationship between rotor blade deflection and time delay of a reflected pulse can be compiled in a look-up table (LUT) or can be used as a basis to establish an equation to express rotor blade deflection as a function of time delay of a reflected pulse.

A pulse is transmitted into the inner end of the down conductor. The reflection time (time elapsed until a reflected pulse returns) and reflection size (size of reflected pulse, i.e. energy of the reflected pulse as a fraction of the energy of the transmitted pulse) are measured. A single transmitted pules may result in multiple reflected pulses, and the reflection time and reflection size are recorded for each reflected pulse.

The calibration procedure is performed by installing a down conductor in a rotor blade, applying known forces at one or more specific points along the rotor blade, and recording the rotor blade deflection (in X, Y and Z directions). For each application of force and deflection measurement, a known pulse is transmitted into the down conductor, and the reflection time and reflection size are recorded for all reflected pulses. The information collected in this way can be used to establish a relationship between force and pulse reflection (for that specific rotor blade and down conductor configuration). The observed rotor blade deflection (in mm) in one or more of the three principle axes is a function of the applied force (in N):

$$D_{xyz} = f_1\left(F_{applied}\right) \qquad (1)$$

The measurements and observations collected during calibration can also be used to establish a further relationship between observed rotor blade deflection and measured pulse reflection:

$$D_{xyz} = f_2(\text{reflection}) \qquad (2)$$

where the term "reflection" comprises the collective response to one or more pulses reflected in the down conductor for a single observed rotor blade deflection. Equation (2) can be used to compile a lookup table or similar to map observed reflections to observed deflections.

Each calibration step (i.e. each separate application of a load to the rotor blade) may be repeated for various temperatures or temperature ranges, since the measurement of pulse reflection in a down conductor may be temperature-dependent to some extent.

The known relationship

$$F_D = \frac{1}{2}\rho A C_D v^2 \qquad (3)$$

relates wind load ($F_D$) in the rotor disc to known parameters $\rho$ (air density in kg/m$^3$), A (rotor swept area in m$^2$), and $C_D$

(rotor blade drag coefficient) and the unknown parameter *v* (wind speed in m/s).

Equations (1) and (2) can then be used to relate an observed reflection to the force acting on the rotor blade during operation of the wind turbine:

$$f_2(\text{reflection}) \rightarrow f_1\left(F_{\text{applied}}\right) \rightarrow F_D$$

making it possible to relate each observed reflection (for a known position of the rotor blade) to a wind speed value:

$$v = \sqrt{\frac{2F_D}{\rho A C_D}} \qquad (4)$$

In this way, by repeatedly transmitting pulses at defined intervals, it is possible to create a map of wind speed over the rotor disc.

In this way, for any one angular position of a rotor blade, the observed time delay and energy of a reflected pulse can be used to deduce a wind speed "seen" by that rotor blade at that angular position. The radial position for that wind speed value *v* is known from the angular position of the rotor blade at time of measurement.

The strain on the rotor blade may also be derived from an observed deflection:

$$\varepsilon = f_3\left(D_{xyzxzy}\right)$$

where ε is a measure of the strain due to elongation or compression of the rotor blade. Again, the relationship may be developed with the aid of a calibration procedure as explained above. Information about estimated strain values during operation of the wind turbine may be used by a controller to adjust relevant control parameters in order to avoid damage to the rotor blade, for example, if an estimated strain value is considered too high. Equally, the controller may adjust relevant control parameters to maximise power output, for example when an estimated strain value is within a "safe" range.

As a rotor blade turns through one revolution, its shape may also be affected to some extent by gravity. A longer blade will be more prone to distortion by gravity than a short blade. For example, when a long rotor blade is at the three o'clock position, its outer end may be deflected downwards, i.e. in the direction of travel. When that rotor blade is at the nine o'clock position, its outer end is also deflected downwards (in a direction opposite to the direction of travel). In a preferred embodiment of the invention, the deflection estimation unit is configured to correct for the effect of gravity on the rotor blade. This can be done for example by determining in advance any deflections that will arise from gravity (knowing the relevant physical dimensions and characteristics of the rotor blade) and calibrating the wind speed estimation arrangement to correct for these. For example, the rotor blade can be arranged in the nine o'clock position during a calibration step and not subject to any other load. Any time delay and/or distortion of the reflected signal are therefore attributed to the effect of gravity.

The computations described above are performed by the deflection estimation unit and the wind speed computation unit. Either one or both of the deflection estimation unit and the wind speed computation unit can be realised locally (i.e. the algorithms run on a local wind turbine controller) or remotely (e.g. the algorithms run on a processor of a remote wind turbine controller, for example on a processor of a wind park controller). If the computations are to be performed at a remote location, the inventive wind speed estimation arrangement preferably comprises a data collection unit for recording transmitted pulse data and reflected pulse data, and a transmitter module configured to transmit the recorded data to the remote location.

Other objects and features of the present invention will become apparent from the following detailed descriptions considered in conjunction with the accompanying drawings. It is to be understood, however, that the drawings are designed solely for the purposes of illustration and not as a definition of the limits of the invention.

Fig 1 shows a wind turbine and indicates its rotor swept area;

Fig 2 shows a block diagram of an embodiment of the inventive wind speed estimation arrangement;

Fig 3 is a schematic diagram showing a pulse reflected by a deflected rotor blade;

Fig 4 shows the effect of various loads on a wind turbine rotor blade.

In the diagrams, like numbers refer to like objects throughout. Objects in the diagrams are not necessarily drawn to scale.

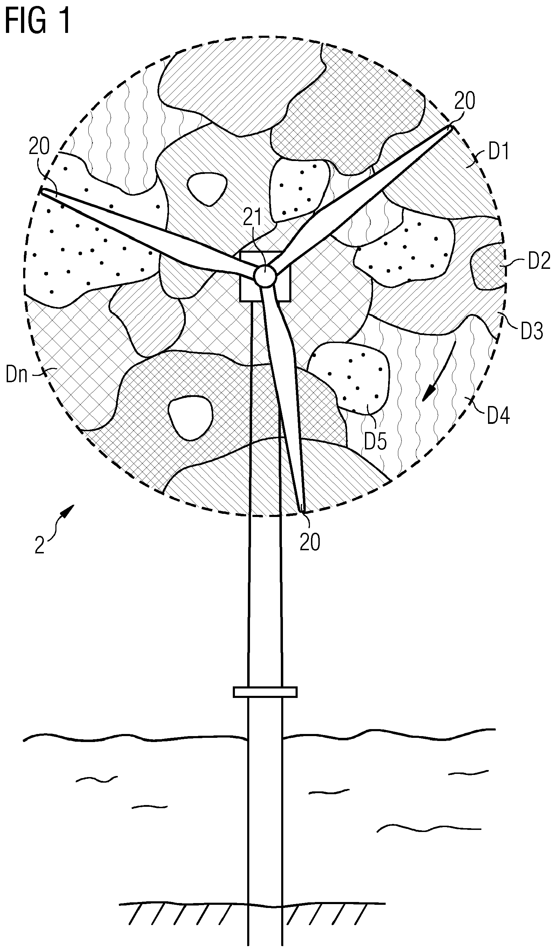

Fig 1 shows a wind turbine 2 (viewed from an upwind vantage point, looking in the direction of the nose or hub) with three rotor blades 20 mounted to the hub 21. The diagram also indicates the circular rotor swept area or rotor disc. Particularly if this wind turbine 2 is located downstream of one or more further wind turbines in a wind park, the wind speed may vary greatly over the rotor disc. Of course, even a "free-standing" wind turbine will see variations in wind speed over its rotor disc. An exemplary wind speed "map" is indicated by the regions D1, D2, ..., Dn with different fill patterns. Each fill pattern represents a distinct wind speed range. The difference between lowest and highest wind speed in the rotor disc can differ depending on various parameters such as the location of the wind turbine 2 (alone or in a wind park; position in a wind park; onshore or offshore; etc.), dimensions of the wind turbine 2 (tower height; rotor blade length; rotor blade thickness; maximum chord length; etc.) and meteorological conditions (air pressure; wind speed in the vicinity; wind gusts; etc.). A major contributor to a large spread in wind speeds is turbulence caused by upwind turbines in a wind park. Wind shear and gusty wind conditions are further contributing factors.

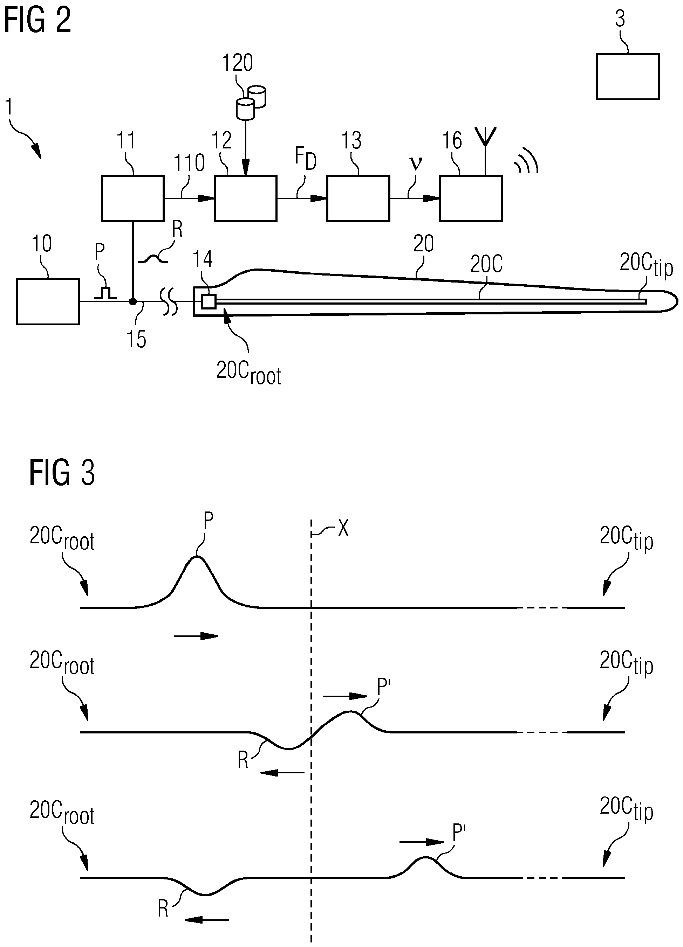

Fig 2 shows a simplified block diagram of an embodiment of the inventive wind speed estimation arrangement 1. The diagram shows a measurement pulse module with a pulse generator 10 and a pulse detector 11. The measurement pulse module 10, 11 is connected to the down conductor 20C of a rotor blade 20 by means of a 50 Q coaxial cable 15 and a connector 14. The pulse generator 10 is arranged to transmit a pulse P into the inner end $20C_{root}$ of the lightning down conductor 20C. The pulse detector 11, for example a time-domain reflectometer or a digital sampling oscilloscope, is arranged to detect the reflected pulse R, and can be realised to report a time delay of the reflected pulse R and/or a magnitude of the reflected pulse R and/or the shape of the reflected pulse R. The parameters(s) 110 are recorded for each detected pulse reflection.

In this exemplary embodiment, the pulse generator 10 applies an electrical pulse P to the inner end $20C_{root}$ of the lightning conductor 20C. The pulse P - in this case a step or square pulse P - travels along the lightning conductor 20C in the direction of the tip. In the absence of any obstacle, the pulse P will be able to travel to the outer end $20C_{tip}$ of the down conductor 20C, where it is reflected. The reflected pulse R travels back to the inner end $20C_{root}$ of the down conductor 20C where it is detected by the pulse detector 11.

If the pulse P meets an obstacle along the way, for example if the down conductor 20C is bent out of shape on account of a rotor blade deflection, the pulse P will be partially or completely reflected and a distorted version R of the pulse will return to the inner end $20C_{root}$ of the down conductor 20C where it is detected by the pulse detector 11. The energy of the reflected pulse R is determined by the extent of deflection of the down conductor, and the time delay of the reflected pulse R is determined by the location of the deflection along the down conductor 20C.

A load estimation unit 12 is configured to estimate a load $F_D$ acting on the rotor blade 20 on the basis of the information 110 provided by the pulse detector 11 with the aid of equations (1) - (3) above. In a straightforward embodiment as indicated here, information relating pulse parameters 110 to wind load $F_D$ can be read from a look-up table 120. Known values of air density, rotor swept area and rotor blade drag coefficient can be used in a wind speed computation unit 13 to compute a value of wind speed $v$ for the current angular position of the rotor blade 20 with the aid of equation (3). The radial position in the rotor disc D for that wind speed value $v$ is known from the angular position of the rotor blade 20 at time of measurement. A large number of such wind speed estimates $v$ are collected for many angular positions of the rotor blades and - in this exemplary embodiment - are forwarded by a transmission unit 16 to a remote control unit 3 of the wind turbine, for example a park controller 3, which can compile a wind speed map for the swept area or rotor disc. With the wind speed map, the park controller 3 can adjust various relevant references, for example pitch references, a torque reference, etc. Since the wind speed map is continually updated, the wind turbine controller can quickly respond as appropriate, thereby optimizing the wind turbine response to alterations in wind speed. For multiple wind turbines in a wind park, the controller can tailor the references for each wind turbine on the basis of the wind speed map computed for each wind turbine. In this way, a wind park can function in more optimal manner, even though each downwind wind turbine is affected to a different extent by any upwind wind turbines.

Fig 3 shows a further pulse P, in this case a Gaussian pulse P as transmitted into the inner end $20C_{root}$ of a down conductor. The diagram also indicates an obstacle X (broken line) to represent a deflection in the down conductor. The diagram shows that part of the pulse is reflected at the obstacle X, while a distorted part of the pulse P' continues in the direction of the tip. Of course, deflection of the rotor blade may result in a number of partial reflections from a single discontinuity or from multiple discontinuities.

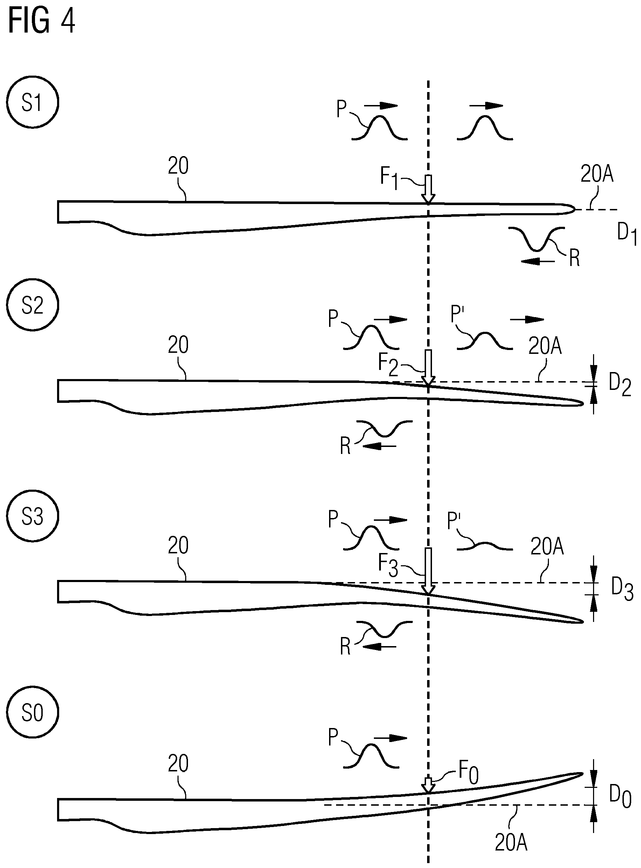

Fig 4 shows the effect of different loads applied at the same point on a rotor blade. State S0 shows the unloaded state of a pre-curved rotor blade 20. The rotor blade 20 shows a degree of curvature away from a longitudinal axis 20A, which is used as a reference against which deflection is measured. In this unloaded state, a default rotor blade deflection $D_0$ is known at the point of intersection with the vertical line. A pulse P transmitted into the down conductor (not shown) will be partially reflected at the point of intersection with the vertical line.

State S1 shows a first loaded state of the same rotor blade 20. A load $F_1$ is acting on the rotor blade 20 at the point of intersection with the vertical line. The rotor blade 20 is bent to such an extent that it is essentially straight. In this loaded state, essentially zero rotor blade deflection $D_1$ is observed. The same pulse P transmitted into the down conductor is able to travel to the down conductor outer end, where it is reflected. The shapes of reflected pulses as described herein serve only to assist in explaining the method and should not be interpreted as actual reflected pulse shapes.

State S2 shows a second loaded state of the same rotor blade 20. A greater load $F_2$ is acting on the rotor blade 20 at the point of intersection with the vertical line. The rotor blade 20 is bent to such an extent that a rotor blade deflection $D_2$ is observed. The same pulse P transmitted into the down conductor will be partially reflected at the point of intersection with the vertical line. The time delay of the reflected pulse R (along with its shape and magnitude), can be used to determine the magnitude of the rotor blade deflection $D_2$, as well as the position along the blade at which the reflection occurred.

State S3 shows a third loaded state of the same rotor blade 20. An even greater load $F_3$ is acting on the rotor blade 20 at the point of intersection with the vertical line. The rotor blade 20 is bent to such an extent that a rotor blade deflection $D_3$ is observed. The same pulse P transmitted into the down conductor will be partially reflected at the point of intersection with the vertical line, and the time delay of the reflected pulse R (along with its shape and magnitude), can be used to determine the magnitude of the rotor blade deflection $D_3$, as well as the position along the blade at which the reflection occurred.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

**Claims**

1. A wind speed estimation arrangement (1) of a wind turbine (2), comprising

   - a measurement pulse module (10, 11) comprising a pulse generator (10) arranged to transmit a pulse (P) into one end ($20C_{root}$) of a lightning down conductor (20C) of a rotor blade (20) of the wind turbine (2) and a pulse detector (11) arranged to detect the reflected pulse (R);
   - a wind load estimation unit (12) configured to estimate a wind load ($F_D$) acting on the rotor blade (20) on the basis of a parameter (110) of the reflected pulse (R); and
   - a wind speed computation unit (13) configured to compute a wind speed estimate (v) for a point in the rotor swept area (D) on the basis of the estimated wind load ($F_D$).

2. A wind speed estimation arrangement according to claim 1, configured to compute a plurality of wind speed estimates (v) for each complete revolution of a rotor blade (20).

3. A wind speed estimation arrangement according to claim 1 or claim 2, wherein a wind load ($F_D$) is estimated on the basis of a time delay of the reflected pulse (R) and/or on the basis of a magnitude of the reflected pulse (R) and/or on the basis of a shape of the reflected pulse (R).

4. A wind speed estimation arrangement according to any of the preceding claims, wherein the wind load estimation unit (12) is configured to correct for the effect of gravity on a rotor blade (20).

5. A wind speed estimation arrangement according to any of the preceding claims, comprising a library module (120) relating reflection parameters (110) of a specific pulse (P) to rotor blade deflection values ($D_0$, $D_1$, $D_2$, $D_3$) and/or relating rotor blade deflection values ($D_0$, $D_1$, $D_2$, $D_3$) to wind load values ($F_0$, $F_1$, $F_2$, $F_3$).

6. A wind turbine (2) comprising a plurality of rotor blades (20), wherein each rotor blade (20) comprises a down conductor (20C) of a lightning protection system arranged in the interior of the rotor blade (20), and further comprising a wind speed estimation arrangement (1) according to any of claims 1 to 5.

7. A wind turbine according to claim 6, wherein the measurement pulse module (10, 11) comprises a single pulse generator (10), and a pulse detector (11) for each rotor blade down conductor (20).

8. A wind turbine according to claim 6 or claim 7, wherein the wind speed computation unit (13) is realised at a location remote from the wind turbine (2).

9. A method of determining wind speeds (v) in the rotor swept area (D) of a wind turbine (2), which method comprises

- providing a wind speed estimation arrangement (1) according to any of claims 1 to 5;
- operating the pulse generator (10) of the measurement pulse module (10, 11) to transmit a pulse (P) into one end ($20C_{root}$) of a lightning down conductor (20C) of a rotor blade (20) of the wind turbine (2);
- operating the pulse detector (11) of the measurement pulse module (10, 11) to detect a reflected pulse (R);
- estimating a wind load ($F_D$) on the rotor blade (20) on the basis of a parameter (110) of the reflected pulse (R); and
- computing a wind speed estimate (v) along a radius of the rotor swept area (D) on the basis of the estimated wind load ($F_D$).

10. A method according to claim 9, wherein the measurement pulse module (10, 11) is operated to transmit at least one pulse (P) into a rotor blade down conductor (20C) as the rotor blade (20) moves through an arc segment of at most 10°, more preferably an arc segment of at most 5°.

11. A method according to claim 9 or claim 10, comprising a prior procedure of calibrating the wind speed estimation arrangement, which calibration procedure comprises the steps of

- applying a known load ($F_0$, $F_1$, $F_2$, $F_3$) at a known point along the rotor blade (20);
- measuring the rotor blade deflection ($D_0$, $D_1$, $D_2$, $D_3$) at that point;
- operating the pulse generator (10) of the measurement pulse module (10, 11) to transmit a pulse (P) into one end ($20C_{root}$) of a lightning down conductor (20C) of the rotor blade (20);
- operating the pulse detector (11) of the measurement pulse module (10, 11) to detect a reflected pulse (R); and
- establishing a relationship between known load ($F_0$, $F_1$, $F_2$, $F_3$) and an observed parameter (110) of the reflected pulse (R).

12. A method according to claim 11, wherein the step of establishing the relationship between a known load ($F_0$, $F_1$, $F_2$, $F_3$) and an observed parameter (110) of the reflected pulse (R) comprises a prior step of establishing a relationship between an observed rotor blade deflection ($D_0$, $D_1$, $D_2$, $D_3$) and the observed parameter (110) of a reflected pulse (R).

13. A method according to claim 11 or claim 12, wherein the step of establishing the relationship between a known load ($F_0$, $F_1$, $F_2$, $F_3$) and an observed parameter (110) of the reflected pulse (R) comprises a prior step of establishing a relationship between the observed rotor blade deflection ($D_0$, $D_1$, $D_2$, $D_3$) and the known load ($F_0$, $F_1$, $F_2$, $F_3$).

14. A method according to any of claims 9 to 13, comprising a step of establishing a relationship between observed rotor blade deflection ($D_0$, $D_1$, $D_2$, $D_3$) and rotor blade strain ($\varepsilon$).

15. A computer program product for carrying out the steps of the method according to any of claims 9 to 14 when the computer program product is loaded into a memory of a programmable device.

# FIG 1

## FIG 2

## FIG 3

FIG 4

Europäisches
Patentamt

European
Patent Office

Office européen
des brevets

# EUROPEAN SEARCH REPORT

Application Number

EP 19 20 6875

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2010/052321 A1 (BILGES SOREN [DE] ET AL) 4 March 2010 (2010-03-04)<br>* paragraph [0010] - paragraph [0011] *<br>* paragraph [0032] - paragraph [0034]; figure 1 *<br>----- | 1-15 | INV.<br>F03D17/00 |
| Y | US 2006/133933 A1 (WOBBEN ALOYS [DE]) 22 June 2006 (2006-06-22)<br>* paragraph [0007] - paragraph [0008] *<br>* paragraph [0069] - paragraph [0094]; claims 14,15,20,31; figures 11-14 *<br>----- | 1-15 | |
| A | EP 2 239 462 A1 (SIEMENS AG [DE]) 13 October 2010 (2010-10-13)<br>* paragraph [0047] - paragraph [0052]; figures 1-4 *<br>* paragraph [0001] - paragraph [0067] *<br>----- | 1-15 | |
| A | EP 3 041 736 A1 (TDC ACQUISITION HOLDINGS INC [US]) 13 July 2016 (2016-07-13)<br>* paragraph [0010] *<br>* paragraph [0026] *<br>* paragraph [0105] - paragraph [0114]; figures 5a,5b,6 *<br>----- | 1-15 | TECHNICAL FIELDS SEARCHED (IPC)<br><br>F03D |
| A | US 2013/302161 A1 (KOERBER ARNE [DE] ET AL) 14 November 2013 (2013-11-14)<br>* paragraph [0041] - paragraph [0042]; figure 5 *<br>* paragraph [0055] - paragraph [0056] *<br>----- | 1-15 | |

The present search report has been drawn up for all claims

| Place of search | Date of completion of the search | Examiner |
|---|---|---|
| The Hague | 9 April 2020 | Herdemann, Claire |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 6875

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2020

| Patent document cited in search report | | Publication date | Patent family member(s) | | Publication date |
|---|---|---|---|---|---|
| US 2010052321 | A1 | 04-03-2010 | DE 102008044652 A1<br>EP 2159418 A2<br>US 2010052321 A1 | | 04-03-2010<br>03-03-2010<br>04-03-2010 |
| US 2006133933 | A1 | 22-06-2006 | AR 042523 A1<br>AU 2003299315 A1<br>BR 0317011 A<br>CA 2507832 A1<br>CN 1726343 A<br>CY 1116470 T1<br>DE 10259680 A1<br>DK 1583906 T3<br>DK 2284393 T3<br>EP 1583906 A1<br>EP 2284393 A2<br>ES 2542844 T3<br>ES 2632214 T3<br>HU E027030 T2<br>JP 4287381 B2<br>JP 4738454 B2<br>JP 2006509958 A<br>JP 2008303882 A<br>KR 20050088389 A<br>KR 20070116159 A<br>KR 20090083429 A<br>NO 339105 B1<br>PL 216993 B1<br>PL 218522 B1<br>PT 1583906 E<br>PT 2284393 T<br>SI 1583906 T1<br>US 2006133933 A1<br>US 2009297346 A1<br>WO 2004055366 A1<br>ZA 200504255 B | | 22-06-2005<br>09-07-2004<br>25-10-2005<br>01-07-2004<br>25-01-2006<br>15-03-2017<br>01-07-2004<br>03-08-2015<br>10-07-2017<br>12-10-2005<br>16-02-2011<br>12-08-2015<br>11-09-2017<br>29-08-2016<br>01-07-2009<br>03-08-2011<br>23-03-2006<br>18-12-2008<br>05-09-2005<br>06-12-2007<br>03-08-2009<br>14-11-2016<br>30-06-2014<br>31-12-2014<br>17-09-2015<br>26-07-2017<br>31-07-2015<br>22-06-2006<br>03-12-2009<br>01-07-2004<br>29-03-2006 |
| EP 2239462 | A1 | 13-10-2010 | CA 2698878 A1<br>EP 2239462 A1<br>US 2010253569 A1 | | 07-10-2010<br>13-10-2010<br>07-10-2010 |
| EP 3041736 | A1 | 13-07-2016 | CN 105873822 A<br>DK 3041736 T3<br>EP 3041736 A1<br>ES 2727518 T3<br>PL 3041736 T3<br>WO 2015035270 A1 | | 17-08-2016<br>27-05-2019<br>13-07-2016<br>16-10-2019<br>30-08-2019<br>12-03-2015 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 19 20 6875

This annex lists the patent family members relating to the patent documents cited in the above-mentioned European search report.
The members are as contained in the European Patent Office EDP file on
The European Patent Office is in no way liable for these particulars which are merely given for the purpose of information.

09-04-2020

| Patent document cited in search report | Publication date | Patent family member(s) | Publication date |
|---|---|---|---|
| US 2013302161   A1 | 14-11-2013 | NONE | |

EPO FORM P0459

For more details about this annex : see Official Journal of the European Patent Office, No. 12/82

page 2 of 2